Europäisches Patentamt

**European Patent Office**

Office européen des brevets

(11) Numéro de publication: **0 167 433**
**B1**

(12) **FASCICULE DE BREVET EUROPEEN**

(19)

(45) Date de publication du fascicule du brevet:
**28.10.87**

(21) Numéro de dépôt: **85401100.4**

(22) Date de dépôt: **04.06.85**

(51) Int. Cl.⁴: **B 64 G 1/44**

(54) Dispositif d'assujettissement provisoire dans l'espace de deux pièces bord à bord.

(30) Priorité: **05.06.84 FR 8408783**

(43) Date de publication de la demande:
**08.01.86 Bulletin 86/2**

(45) Mention de la délivrance du brevet:
**28.10.87 Bulletin 87/44**

(84) Etats contractants désignés:
**BE CH DE GB IT LI NL SE**

(56) Documents cités:
**DE - A - 2 252 093**
**FR - A - 2 398 663**
**FR - A - 2 501 155**
**US - A - 3 091 487**
**US - A - 3 677 508**
**US - A - 3 995 685**

(73) Titulaire: **AEROSPATIALE Société Nationale Industrielle, 37, Boulevard de Montmorency, F-75781 Paris Cédex 16 (FR)**

(72) Inventeur: **Bard, Max, Le Marignan 75 Boulevard de la République, F-06400 Cannes (FR)**
Inventeur: **Sibilo, Gérard, Appt. 149, Bât. B1, La Ribassiero, F-06130 Le Plan De Grasse (FR)**
Inventeur: **Marello, Georges, 520, rue Janvier Pasero, F-06210 Mandelieu (FR)**
Inventeur: **Viale, Daniel, La Colle de Michel Tanneron, F-83440 Fayence (FR)**
Inventeur: **Louis, Michel, 19, Avenue Sainte Marguerite, F-06200 Nice (FR)**

(74) Mandataire: **Rinuy, Santarelli, 14, avenue de la Grande Armée, F-75017 Paris (FR)**

## Description

L'invention concerne un dispositif d'assujettissement provisoire dans l'espace de deux pièces bord à bord tel qu'on en utilise notamment pour la fermeture provisoire de conteneurs spatiaux, destinés par exemple à un stockage temporaire de panneaux solaires ne devant se déployer qu'après mise en orbite d'un satellite porteur.

Ainsi qu'on le sait, de tels conteneurs spatiaux sont généralement constitués d'un corps creux, par exemple parallélipipédique, fermé par au moins un couvercle, et les dispositifs d'assujettissement provisoire de leurs pièces constitutives comportent un mécanisme de libération automatique adapté à permettre, voire provoquer, la séparation de ces pièces en réponse à des ordres de déclanchement d'ouverture, préalablement au déploiement du contenu de ces conteneurs.

On connaît principalement à ce jour, comme mécanismes d'ouverture de conteneurs spatiaux, les dispositifs suivants:

— on a déjà proposé un dispositif comportant une série de crochets souples solidaires de l'une ou l'autre des parties assujetties, et adaptés à être dégagés de la partie complémentaire sous l'effet d'une came actionnée par un ordre d'ouverture. Dans sa forme classique, ce dispositif n'est pas conçu pour passer les efforts de cisaillement qui apparaissent dans des applications impliquant des porte-à-faux importants;

— le brevet DE-A-28 32 306 (ou GB-A-31400-77) décrit quant à lui un système de fermeture pour une enveloppe souple contenant un générateur solaire. Ladite enveloppe ne peut pas passer des efforts de cisaillement et le système de fermeture ne comporte que des cavaliers qui maintiennent en position de recouvrement les talons de chaque paire de sangles reliées chacune à un bord de l'enveloppe souple. Une lame flexible guidée assure l'ouverture simultanée sous l'action d'un vérin pyrotechnique;

— le brevet FR-A-2501155, de la demanderesse, qui décrit par rapport aux figures 1 à 3 un état de la technique correspondant au préambule de la revendication 1, permet par contre de passer un flux de cisaillement important, au moyen d'une liaison assurée par des clinquants soudés sur des plaquettes assemblées sur la structure et le couvercle du conteneur. L'ouverture est assurée par l'action d'un ressort qui fait peler les liaisons soudées en soulevant celles-ci par une extrémité. Une difficulté essentielle de cette solution réside toutefois dans la réalisation et la reproductibilité de la soudure du clinquant sur les plaquettes.

La présente invention a pour objet un dispositif d'assujettissement provisoire de deux pièces bord à bord, telles que par exemple deux pièces d'un conteneur spatial, qui soit adapté, d'une part, à transmettre entre ces pièces, outre des efforts de maintien en contact, des efforts de cisaillement dans le plan de leur surface de contact et, d'autre part, permettre une libération automatique fiable de ces pièces l'une vis-à-vis de l'autre en réponse à un ordre d'ouverture; l'invention vise tout particulièrement un dispositif du type précité qui soit adapté à être mis en oeuvre dans un environnement sévère, du type vide spatial, dans lequel des structures mécaniques sont couramment le siège de très forts gradients de température, voire de brutales variations de température sur des écarts importants en fonction de leur orientation vis-à-vis du soleil. L'invention vise en outre à optimiser la géométrie des surfaces de contact entre les pièces à assujettir en sorte de minimiser leurs jeux relatifs.

De manière générale, l'invention propose à cet effet un dispositif d'assujettissement provisoire dans l'espace de deux pièces bord à bord suivant une surface de contact, du genre comportant des organes de retenue répartis par paires de part et d'autre de cette surface de contact sur chacune desdites pièces respectivement et des organes de liaison temporaire pour maintenir attelés les organes de retenue de chaque paire, ainsi qu'un mécanisme de libération automatique comportant un élément de coordination relié aux organes de liaison temporaire et adapté à dégager ces derniers vis-à-vis des organes de retenue sous l'action d'un mécanisme d'ouverture, caractérisé en ce que les organes de retenue d'une même paire sont munis de reliefs complémentaires pour leur retenue l'un vis-à-vis de l'autre suivant une direction longitudinale parallèle à la surface de contact desdites pièces, dans un sens au moins, et que ces organes de retenue forment conjointement un tenon renflé orienté longitudinalement, engagé dans une rainure étranglée ménagée dans un cavalier formant organe de liaison temporaire.

L'invention préconise tout particulièrement que le tenon renflé et la rainure étranglée soient conformés en queue d'aronde.

Le fait d'assujettir deux pièces bord à bord au moyen d'un cavalier venant en prise sur un tenon longitudinal renflé est en lui-même connu d'après les brevets U.S. 3.091.487 et 3.995.685 notamment, mais aucun d'entre eux ne décrit ni ne suggère la combinaison de tels cavaliers avec un mécanisme de libération automatique. Seul le premier de ces documents propose une retenue longitudinale des deux pièces l'une par rapport à l'autre, mais celle-ci est assurée par le cavalier lui-même, qui ne peut donc pas être combiné avec un mécanisme de libération en vue d'un dégagement longitudinal vis-à-vis du tenon renflé associé. Ces documents ne concernent pas le domaine spatial.

La forme des reliefs complémentaires de retenue longitudinale d'un dispositif selon l'invention est susceptible de nombreuses variantes en fonction des applications considérées. Dans sa forme générale, un dispositif selon l'invention assure la transmission, dans les deux sens, d'efforts longitudinaux de cisaillement pourvu que des paires successives d'organes de retenue à l'ouverture présentent des reliefs complémentaires de retenue longitudinale adaptés à agir dans des sens opposés. L'invention préconise toutefois que les reliefs complémentaires de chaque paire puissent assurer une retenue longitudinale dans les deux sens. Ces reliefs peuvent consister en des ondulations ou une succession en ligne brisée de pans inclinés. L'invention préconise toutefois que ces reliefs consistent en un tenon et une mortaise à flancs sensiblement parallèles avec toutefois, de préférence, une inclinaison de quelques degrés pour en faciliter la séparation.

Les cavaliers d'un dispositif selon l'invention assurent conjointement avec les organes de retenue associés la transmission entre les pièces assujetties d'efforts transversaux de cisaillement, perpendiculairement à l'orientation des tenons et mortaises. L'invention préconise en outre la mise en oeuvre de reliefs additionnels ménagés en regard le long de la surface de contact des pièces assujetties pour leur retenue transversale en cisaillement. Les reliefs peuvent être combinés avec les reliefs précités de retenue longitudinale. L'invention préconise toutefois que ces reliefs de retenue transversale soient intercalés le long de la surface de contact entre des paires d'organes de retenue pour assurer de la manière la plus continue possible une retenue transversale des pièces tout au long de leur surface de contact. Ces reliefs sont avantageusement des biseaux.

L'invention préconise en outre que l'élément de coordination relié aux cavaliers en vue de leur dégagement au moment voulu soit relié en outre à un écarteur, par exemple constitué d'un couteau, une entaille au moins étant ménagée longitudinalement près de la surface de contact des deux pièces en sorte d'assurer, par coopération avec l'écarteur, un écartement forcé des pièces après le dégagement des organes de liaison vis-à-vis des organes de retenue.

Par mesure de simplification, l'invention préconise que les organes de retenue, ainsi que les reliefs de retenue transversale, soient ménagés sur des plaquettes rapportées aux pièces à assujettir provisoirement. De la sorte, un dispositif de fermeture provisoire peut être assemblé puis fixé dans son ensemble sur les pièces à assujettir: les opérations d'assemblage de ce dispositif, et des pièces à assujettir, s'en trouvent simplifiées et facilitées.

L'invention ressort de la description qui suit, donné à titre d'exemple non limitatif, en regard des dessins annexés sur lesquels:
— la figure 1 est une vue latérale partielle d'un conteneur spatial doté de deux dispositifs d'assujettissement provisoire selon l'invention;
— la figure 2 est une vue agrandie du détail de la figure 1 désigné par la flèche II;
— la figure 3 en est une vue en coupe selon la ligne III-III de la figure 2;
— la figure 4 est une vue agrandie en coupe du détail de la figure 1 désigné par la flèche IV;
— la figure 5 est une vue agrandie du détail de la figure 1 désigné par la flèche V; et
— la figure 6 est une vue de dessus selon la flèche VI de la partie inférieure de la figure 1, après agrandissement.

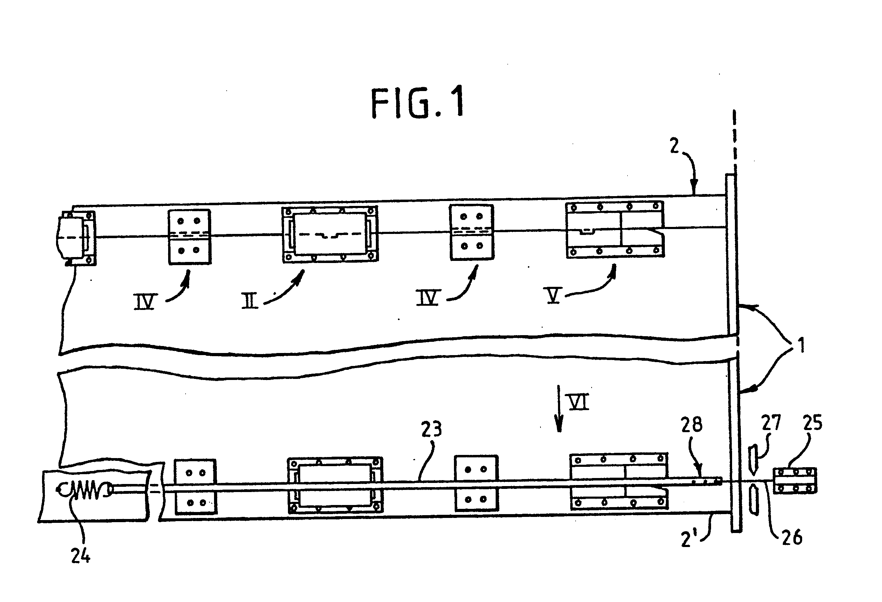

Les figures 1 à 6 illustrent à titre d'exemple un dispositif d'assujettissement provisoire selon l'invention appliqué à la fermeture temporaire d'un conteneur spatial formé d'un corps creux 1 globalement rectangulaire fermé par deux couvercles 2 et 2'.

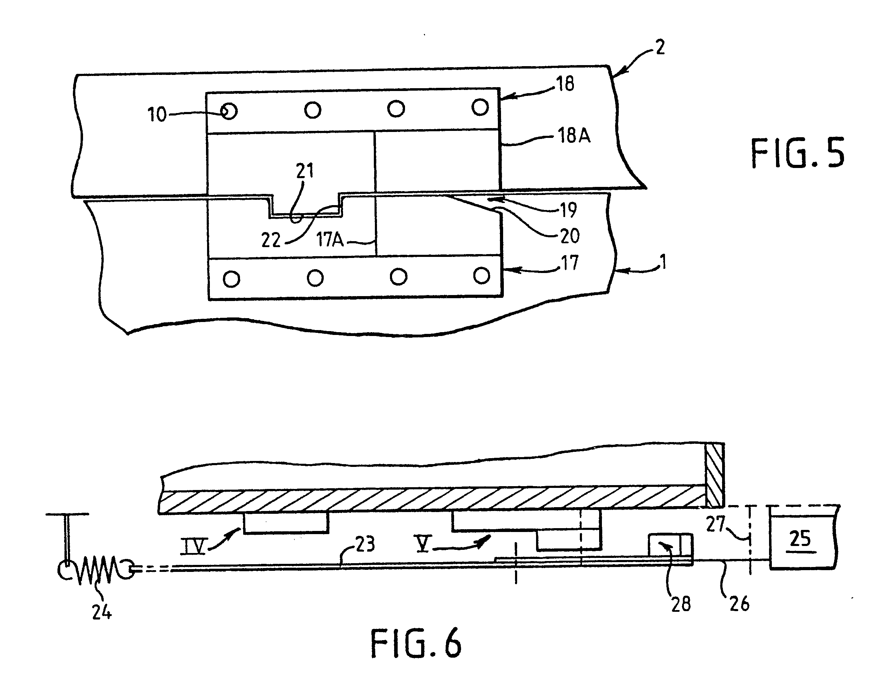

Un dispositif sensiblement complet selon l'invention est représenté à la partie basse de la figure 1 et à la figure 6, tandis que la partie haute de cette figure 1 représente un dispositif analogue après enlèvement du mécanisme de libération automatique associé.

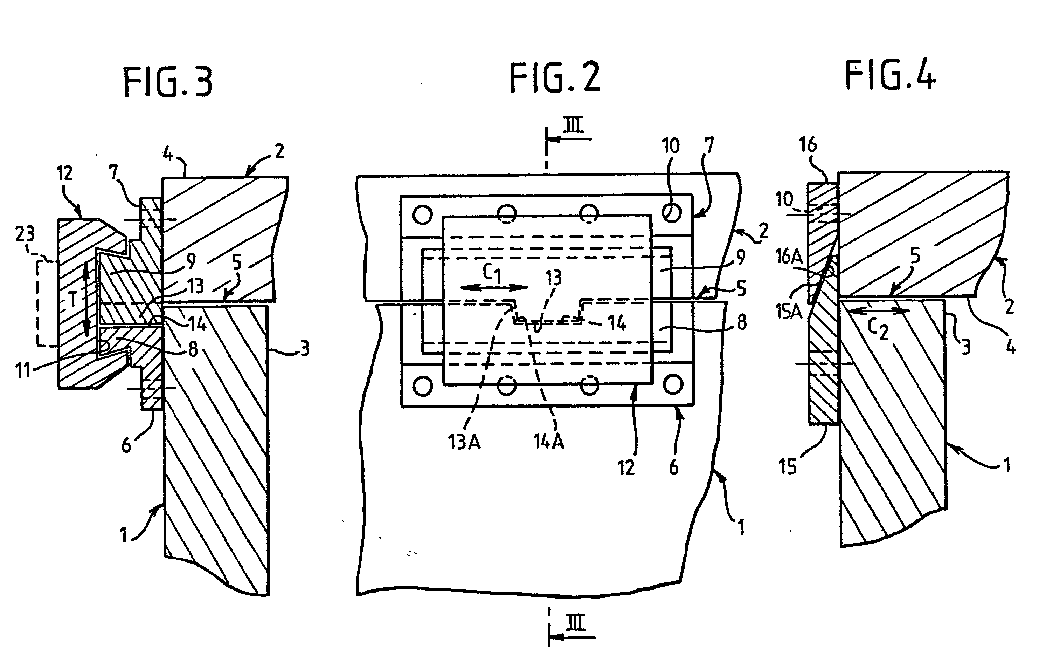

Les dispositifs d'assujettissement provisoire représentés à titre d'exemple à la figure 1 comprennent principalement, pour l'assujettissement bord à bord des couvercles 2 et 2' au corps 1, des ensembles de liaison du type désigné par la flèche II de la figure 1 et représenté en détail aux figures 2 et 3.

Un tel ensemble de liaison est monté à cheval sur des bords respectifs 3 et 4 du corps de conteneur 1 et du couvercle 2 accolés selon une surface de contact 5. Ces bords définissent une surface extérieure continue sur laquelle sont montés deux organes de retenue 6 et 7 définissant conjointement un tenon renflé en deux parties 8 et 9 accolées.

Dans l'exemple représenté, ces organes 6 et 7 sont munis d'alésages 10, en vue d'être rapportés, par des vis notamment, aux bords 3 et 4 des pièces à assujettir.

Le tenon renflé est, dans l'exemple représenté, conformé en queue d'aronde et a une section trapézoïdale; il est engagé dans une rainure étranglée 11 ménagée dans un cavalier 12, qui, par action sur les organes de retenue 6 et 7, assure le maintien bord à bord des pièces 1 et 2 à l'encontre d'efforts d'ouverture T perpendiculaires à la surface de contact 5 des deux pièces. Dans l'exemple représenté, la rainure étranglée 11 est une mortaise en queue d'aronde.

Le tenon renflé 8 et 9 et la rainure 10 sont orientés longitudinalement, parallèlement à la surface de contact 5 et à la surface extérieure des pièces à assujettir.

En vue d'assurer une retenue longitudinale de ces bords dans un sens au moins, les organes de retenue 6 et 7 présentent des reliefs complémentaires. Dans l'exemple représenté, ces reliefs sont constitués par un tenon 13 solidaire de l'organe 7, engagé dans une mortaise 14 ménagée dans l'organe 6. Ce tenon et cette mortaise sont orientés transversalement et assurent une retenue longitudinale des organes 6 et 7 dans les deux sens (efforts $C_1$ de cisaillement). Leurs flancs 13A et 14A sont sensiblement perpendiculaires à la surface de contact 5, avec de préférence une inclinaison de quelques degrés vis-à-vis de T. On notera que, dans l'exemple représenté, les organes de retenue 6 et 7 sont accolés selon une surface globalement plane, parallèle à la surface de contact 5 des pièces 1 et 2 et, de plus, située dans le prolongement de cette dernière.

Dans une variante non représentée, la surface d'affrontement des organes de retenue, pourvus ou non d'un tenon et d'une mortaise complémentaires, est inclinée au moins autour d'un axe transversal, de préférence composée d'une pluralité de pans successifs d'inclinaisons opposées en sorte de définir sur l'un des organes au moins un angle sortant engagé dans un angle rentrant défini sur l'autre organe.

Un dispositif d'assujettissement provisoire selon l'invention comporte généralement une pluralité d'ensembles de liaison du type précité, répartis le long de la surface de contact 5. Entre ces ensembles sont avantageusement disposés des ensembles additionnels de retenue transversale dont l'un est représenté à titre d'exemple à la figure 4.

L'ensemble additionnel représenté à la figure 4 est constitué de deux plaquettes ou talons 15 et 16 rapportées respectivement au bord 3 du corps 1 et au bord 4 du couvercle 2, affrontées selon deux tranches biseautées 15A et 16A. En configuration d'affrontement, ces tranches interceptent avantageusement le prolongement de la surface de contact 5 des bords 3 et 4: de la sorte, l'une (15A) de ces tranches est engagée dans une rainure définie par la tranche associée (16A) et le bord qui la porte. Cette configuration permet la transmission d'efforts transversaux de cisaillement dans les deux sens, entre les bords 3 et 4 (efforts notés $C_2$).

Dans une variante non représentée, les surfaces d'affrontement des organes de retenue 6 et 7 sont de même conformées en biseau.

On peut noter que, de par la venue en butée de deux parties 8 et 9 du tenon renflé contre le fond de la rainure 11, les organes de retenue 6 et 7 et le cavalier 12 assurent également, conjointement, une certaine retenue transversale des bords 3 et 4.

Le dispositif d'assujettissement bord à bord selon l'invention représenté à titre d'exemple, comporte en outre, de façon avantageuse, un ensemble de séparation illustré par la figure 5. Il comprend deux plaquettes 17 et 18 rapportées respectivement au corps de conteneur 1 et au couvercle 2, affrontées selon des surfaces d'appui sensiblement parallèles à la surface de contact des pièces 1 et 2 assujetties, mais qui s'écartent l'une de l'autre dans un sens longitudinal, en sorte de définir une fente d'écartement 19 dont le but apparaîtra plus loin. Dans l'exemple représenté, cette fente est définie par une rampe en biseau 20 ménagée sur une seule (17) des plaquettes.

Cette fente 19 est avantageusement ménagée sur des portions 17A et 18A des plaquettes qui ont une dimension transversale supérieure à celle des ensembles de liaison ou des ensembles additionnels de retenue transversale.

Dans l'exemple représenté, ces plaquettes 17 et 18 s'interpénètrent en outre par un tenon 21 d'une plaquette (18) engagé dans une mortaise 22 ménagée sur l'autre plaquette (17).

En variante non représentée, les plaquettes 17 et 18 sont en outre conformées en sorte de définir, comme les organes 6 et 7 de la figure 2, un tenon renflé engagé dans une rainure étranglée ménagée sur un cavalier analogue à la pièce 12.

Les plaquettes 15 à 18 comportent, comme les organes 6 et 7, des alésages 10 pour leur fixation aux pièces 1 et 2 à assujettir.

Outre ces ensembles illustrés aux figures 2 à 5, un dispositif selon l'invention comporte un mécanisme de libération mécanique partiellement représenté en vue de dessus à la figure 6.

Ce mécanisme comprend principalement un élément de coordination et de transmission 23, par exemple constitué d'une tringle ou d'une lame, relié à tous les cavaliers du type représenté aux figures 2 et 3 et adapté à les dégager vis-à-vis des organes de retenue associés sous l'action d'un organe d'entraînement 24, (porté par l'une ou l'autre des pièces assujetties), en réponse à un ordre de déclenchement d'ouverture.

Dans l'exemple représenté, l'organe d'entraînement est un ressort maintenu tendu par un dispositif de verrouillage 25, permettant avantageusement un réglage de tension, relié à l'élément de coordination par un câble 26 passant dans un organe de déclenchement d'ouverture 27, par exemple du type coupe-câble à commande pyrotechnique. L'organe d'entraînement, le dispositif de verrouillage et l'organe de déclenchement constituent conjointement un mécanisme d'ouverture.

L'élément de coordination 23 comporte en outre, de façon avantageuse, un couteau 28 destiné à s'engager, après que les cavaliers 12 aient été dégagés des organes de retenue associés, dans la fente 19 de l'ensemble de séparation 17-18. Par effet de coin, ce couteau 28 force ainsi les deux pièces 1 et 2 à s'écarter malgré d'éventuels frottements résiduels provenant en particulier de déformations thermiques ou plastiques susceptibles de se produire au niveau notamment des divers engagements à tenon et mortaise.

Dans une variante non représentée, l'organe d'entraînement est un moteur, par exemple de type pyrotechnique.

L'élément de coordination 23 est avantageusement engagé dans des éléments de guidage (non représentés) adaptés à laisser à cet élément un débattement longitudinal suffisant pour assurer le dégagement relatif des cavaliers et des organes de retenue, tout en les maintenant latéralement en sorte d'empêcher que cet élément, le couteau 28 associé ou les cavaliers 12 viennent interférer avec le déploiement du contenu du conteneur ou avec d'autres éléments mécaniques ou optiques de la structure à laquelle le conteneur est fixé.

Ainsi le maintien par frottement des cavaliers sur les tenons renflés peut être amélioré par l'aménagement de ces cavaliers et de ces tenons en sorte d'obtenir pour ceux-ci une variation monotone de section: il en résulte un très bon coincement des cavaliers en configuration de maintien en contact des organes de retenue et un dégagement plus facile de ces cavaliers dès qu'ils ont commencé à coulisser vis-à-vis de ces organes de retenue. De même les reliefs complémentaires des organes de retenue à l'ouverture ou de retenue transversale peuvent comporter des marches, voire des tétons perpendiculaires à la surface de contact des pièces assujetties. Un nombre quelconque de dispositifs peut être mis en oeuvre pour l'assujettissement provisoire bord à bord de deux pièces données; lorsque ce nombre est supérieur à 1, il faut cependant que les mécanismes de libération mécanique associés soient synchronisés. Le couteau 28 est disposé de façon avantageuse, mais non impérative, en une extrémité de l'élément de coordination 23; en variante, cet élément est pourvu à chaque extrémité de couteaux orientés dans le même sens.

Il est précisé que les conteneurs spatiaux, notamment pour le stockage de panneaux solaires, contiennent généralement une vessie sous pression destinée à bien maintenir ces panneaux les uns contre les autres en une configuration aussi rigide que possible. La présence de cette vessie dans un conteneur équipé selon l'invention a l'avantage de compenser d'éventuels jeux entre les organes de retenue et le cavalier associé grâce à la pression accrue qui en résulte entre les flancs du tenon formé par ces organes et les flancs de la rainure de ce cavalier (parallèlement à la flèche T de la figure 3). Cette vessie est en pratique dégonflée avant de procéder à la phase de libération automatique.

**Revendications**

1. Dispositif d'assujettissement provisoire dans l'espace de deux pièces (1, 2) bord à bord (3, 4) suivant une surface de contact (5), du genre comportant des organes de retenue (6, 7) répartis par paires de part et d'autre de cette surface de contact (5) sur chacune desdites pièces respectivement et des organes de liaison temporaire (12) pour maintenir attelés les organes de retenue (6, 7) de chaque paire, ainsi qu'un mécanisme de libération automatique comportant un élément de coordination (23) relié aux organes de liaison temporaire (12) et adapté à dégager ces derniers vis-à-vis des organes de retenue (6, 7) sous l'action d'un mécanisme d'ouverture, caractérisé en ce que les organes de retenue (6, 7) d'une même paire sont munis de reliefs complémentaires (13, 14) pour leur retenue l'un vis-à-vis de l'autre, suivant une direction longitudinale parallèle à la surface de contact (5) desdites pièces, dans un sens au moins, et que ces organes de retenue forment conjointement un tenon renflé (8, 9) orienté longitudinalement, engagé dans une rainure étranglée (11) ménagée dans un cavalier (12) formant organe de liaison temporaire.

2. Dispositif selon la revendication 1, caractérisé en ce que les organes de retenue (6, 7) forment conjointement un tenon en queue d'aronde engagé dans une rainure (11) en queue d'aronde présentée par le cavalier.

3. Dispositif selon la revendication 1 ou la revendication 2, caractérisé en ce que les reliefs complémentaires (13, 14) comportent des flancs (13A, 14A) adaptés à assurer leur retenue longitudinale dans les deux sens.

4. Dispositif selon la revendication 3, caractérisé en ce que les reliefs complémentaires consistent en un tenon (13) à flancs sensiblement parallèles engagé dans une mortaise (14).

5. Dispositif selon la revendication 4, caractérisé en ce que ces flancs sensiblement parallèles (13A, 14A) présentent respectivement une inclinaison relative de quelques degrés.

6. Dispositif selon l'une quelconque des revendications 1 à 5, caractérisé par l'aménagement, le long de la surface de contact (5) des pièces (1, 2, 2') assujetties bord à bord, de reliefs complémentaires (15A, 16A) de retenue transversale.

7. Dispositif selon la revendication 6, caractérisé en ce que ces reliefs de retenue transversale sont ménagés entre deux paires successives d'organes de retenue (6, 7).

8. Dispositif selon la revendication 6 ou la revendication 7, caractérisé en ce que ces reliefs sont des tranches biseautées de deux plaquettes (15, 16) rapportées aux pièces à assujettir, l'une de ces tranches (15A) étant engagée dans une rainure définie par l'autre tranche (16A) et la pièce associée.

9. Dispositif selon l'une quelconque des revendications 1 à 8, caractérisé en ce qu'il comporte deux plaquettes (17, 18) accolées par leurs tranches, fixées respectivement sur chacune des pièces à assujettir bord à bord, et définissant une fente (19) adaptée à recevoir, en vue d'un écartement forcé de ces pièces, un couteau (28) fixé sur l'élément de coordination (23) du mécanisme de libération automatique en sorte de coopérer avec cette fente après que les cavaliers (12) également fixés sur cet élément de coordination aient été dégagés vis-à-vis des tenons renflés (8, 9) associés.

10. Dispositif selon l'une quelconque des revendications 1 à 9, caractérisé en ce que l'élément de coordination (23) est un élément allongé aux extrémités duquel sont fixés respectivement un ressort sous tension (24) et un câble relié à un élément de verrouillage (25) et traversant un élément coupe-câble (27).

**Patentansprüche**

1. Provisorische Verbindungsvorrichtung von zwei aneinanderstossenden (3, 4) Teilen (1, 2) im Raum längs einer Kontaktfläche (5), der Art mit Halteorganen (6, 7), die paarweise angeordnet sind, wobei je Paar beiseits der Kontaktfläche (5) auf jedem der Teile jeweils ein Halteorgan angebracht ist, um mit Organen (12) für eine zeitweise Verbindung, um die Halteorgane (6, 7) jedes Paar angekoppelt zu halten, sowie mit einer automatischen Öffnungseinrichtung, die ein Koordinationselement (23) enthält, das den Organen (12) für eine zeitweise Verbindung zugeordnet und dazu eingerichtet ist, diese letzteren von den Halteorganen (6, 7) unter Einwirkung eines Öffnungsmechanismusses abzukoppeln, dadurch gekennzeichnet, dass die Halteorgane (6, 7) jeweils eines Paares mit zueinander komplementären Formen (13, 14) zur gegenseitigen Abstützung entlang einer zu ihrer Kontaktfläche (5) parallelen Längsrichtung in zumindest einer Bewegungsrichtung versehen sind, und dass die Halteorgane gemeinsam einen sich erweiternden Zapfen (8, 9) ausbilden, der in Längsrichtung orientiert ist und in eine eingeschnürte Nut (11) eingreift, die in einem ein Organ für eine zeitweise Verbindung ausbildenden Reiter (12) vorgesehen ist.

2. Vorrichtung nach Anspruch 1, dadurch gekennzeichnet, dass die Halteeinrichtungen (6, 7) gemeinsam einen Schwalbenschwanzzapfen ausbilden, der in eine vom Reiter dargebotene Schwalbenschwanznut (11) eingreift.

3. Vorrichtung nach Anspruch 1 oder 2, dadurch gekennzeichnet, dass die zueinander komplementären Formen (13, 14) mit Flanken (13A, 14A) zur Sicherung ihrer gegenseitigen Längsabstützung in den beiden Bewegungsrichtungen versehen sind.

4. Vorrichtung nach Anspruch 3, dadurch gekennzeichnet, dass die komplementären Formen aus einem in eine Ausnehmung (14) eingreifenden Zapfen (13) mit im wesentlichen parallelen Flanken bestehen.

5. Vorrichtung nach Anspruch 4, dadurch gekennzeichnet, dass die im wesentlichen parallelen Flanken (13A, 14A) jeweils eine relative Schräge von einigen Grad aufweisen.

6. Vorrichtung nach einem der Ansprüche 1 bis 5, dadurch gekennzeichnet, dass komplementäre Formen (15A, 16A) für eine Querabstützung entlang der Kontaktfläche (5) der aneinander befestigten Teile (1, 2, 2') vorgesehen sind.

7. Vorrichtung nach Anspruch 6, dadurch gekennzeichnet, dass diese Formen für die Querabstützung zwischen zwei aufeinanderfolgenden Paaren von Halteorganen (6, 7) angebracht sind.

8. Vorrichtung nach Anspruch 6 oder Anspruch 7, dadurch gekennzeichnet, dass die Formen als abgeschrägte Abschnitte von zwei dünnen Leisten (15, 16) ausgebildet und an den miteinander zu verbindenden Teilen befestigt sind, wobei der eine dieser Abschnitte (15A) in eine Nut eingreift, die vom anderen Abschnitt (16A) und dem diesem zugeordneten Teil festgelegt wird.

9. Vorrichtung nach einem der Ansprüche 1 bis 8, dadurch gekennzeichnet, dass zwei durch ihre Abschnitte miteinander gekoppelte dünne Leisten (17, 18) vorgesehen sind, die jeweils auf einem der aneinander zu befestigenden Teile befestigt sind und die einen Spalt (19) definieren, der dafür eingerichtet ist, für eine zwangsweise Trennung der Teile ein Trennmesser (28) aufzunehmen, das auf dem Koordinationselement (23) der automatischen Öffnungseinrichtung derart befestigt ist, dass es mit dem Spalt zusammenwirkt, nachdem die ebenfalls auf diesem Koordinationselement befestigten Reiter (12) von den zugeordneten sich erweiternden Zapfen (8, 9) abgekoppelt sind.

10. Vorrichtung nach einem der Ansprüche 1 bis 9, dadurch gekennzeichnet, dass das Koordinationselement (23) ein längliches Element ist, an dessen Enden jeweils eine unter Spannung stehende Feder (24) bzw. ein an ein Verriegelungselement (25) angeschlossenes und einen Kabelschneider (27) durchlaufendes Kabel befestigt sind.

## Claims

1. Device for temporarily connecting two components (1, 2) edge to edge (3, 4) in space along a contact surface (5), of the type comprising retention members (6, 7) distributed in pairs on either side of this contact surface (5) on each of the said components respectively, temporary connection members (12) for keeping the retention members (6, 7) of each pair coupled together, and an automatic release mechanism comprising a coordination element (23) attached to the temporary connection members (12) and designed to release these from the retention members (6, 7) under the action of an opening mechanism, characterized in that the retention members (6, 7) of one and the same pair are equipped with matching reliefs (13, 14) for retaining them relative to one another longitudinally and parallel to the contact surface (5) of the said components, in at least one direction, and in that these retention members together form an expanded tenon (8, 9) directed longitudinally and engaged in a contracted slot (11) made in a clamp (12) forming a temporary connection member.

2. Device according to Claim 1, characterized in that the retention members (6, 7) together form a dovetailed tenon engaged in a dovetailed slot (11) in the clamp.

3. Device according to Claim 1 or Claim 2, characterized in that the matching reliefs (13, 14) have flanks (13A, 14A) designed to ensure that they are retained longitudinally in both directions.

4. Device according to Claim 3, characterized in that the matching reliefs consist of a tenon (13) having substantially parallel flanks and engaged in a mortise (14).

5. Device according to Claim 4, characterized in that these substantially parallel flanks (13A, 14A) each have a relative inclination of a few degrees.

6. Device according to any one of Claims 1 to 5, characterized in that matching reliefs (15A, 16A) for transverse retention are arranged along the contact surface (5) of the components (1, 2, 2') connected edge to edge.

7. Device according to Claim 6, characterized in that these transverse retention reliefs are made between two successive pairs of retention members (6, 7).

8. Device according to Claim 6 or Claim 7, characterized in that these reliefs are bevelled edges of two plates (15, 16) attached to the components to be connected, one of these edges (15A) being engaged in a slot defined by the other edge (16A) and by the associated component.

9. Device according to any one of Claims 1 to 8, characterized in that it possesses two plates (17, 18) which are joined at their edges and are fastened respectively to each of the components to be connected edge to edge and which define a chink (19) intended, for the purpose of forcibly moving these components apart, to receive a knife (28) fastened to the coordination element (23) of the automatic release mechanism, in order to interact with this chink after the clamps (12) likewise fastened to this coordination element have been disengaged from the associated expanded tenons (8, 9).

10. Device according to any one of Claims 1 to 9, characterized in that the coordination element (23) is an elongate element, to the ends of which are fastened respectively a tensioned spring (24) and a cable connected to a locking element (25) and passing through a cable-cutting element (27).

# FIG.1

0 167 433

# FIG.3

12 7 4 2
23 9 5
T 13
14
11 8
6 3
1

# FIG.2

III
10 7
2
C₁ 13 9
5
14 8
13A 14A
12 6
1
III

# FIG.4

16
10
16A
5
15A C₂
2
15 4
3
1

0 167 433

FIG. 5

FIG. 6